# EUROPÄISCHE PATENTSCHRIFT

(11) **EP 2 029 252 B1**
(45) Veröffentlichungstag und Bekanntmachung des Hinweises auf die Patenterteilung: **11.01.2012**
(21) Anmeldenummer: 07722477.2
(22) Anmeldetag: 29.05.2007
(51) Int. Cl.: B01D 21/24, C02F 1/00

(54) **ANLAGE ZUR ABWASSERBEHANDLUNG**
WASTEWATER TREATMENT PLANT
INSTALLATION DE TRAITEMENT DES EAUX USEES

(30) Priorität: 08.06.2006 DE 102006027031
(43) Veröffentlichungstag der Anmeldung: 04.03.2009
(73) Patentinhaber: Verink, Johan, 30625 Hannover (DE)
(72) Erfinder: Verink, Johan, 30625 Hannover (DE)
(74) Vertreter: Scheffler, Jörg
(86) Internationale Anmeldenummer: PCT/DE2007/000961
(87) Internationale Veröffentlichungsnummer: WO 2007/140744

(56) Entgegenhaltungen:
- WO-A-02/34677
- WO-A-03/105987
- DE-A1- 3 906 614
- US-A- 5 152 888

## Beschreibung

Die Erfindung betrifft eine Anlage zur Behandlung von Abwasser und Schlamm nach dem Oberbegriff des Anspruchs 1

Die WO 2003/105987 A1 beschreibt bereits eine Vorrichtung zur Behandlung von Abwasser mit zumindest einer Zufuhrleitung und einem mit Austrittsöffnungen ausgestatteten, beweglichen Abwasserverteiler für das zu behandelnde Abwasser, welcher in einem Behandlungsbecken positionierbar ist, wobei die Zufuhrleitung flexibel und/oder elastisch ausgeführt ist und der Abwasserverteiler reversierend zwischen gegenüberliegenden Randbereichen des Behandlungsbeckens beweglich ist. Dabei ruht der Abwasserverteiler auf einem Wagen, der mittels Rädern auf Schienen verfahrbar ist.

Die WO 2002/34677 A2 zeigt einen Abwasserverteiler, welcher mittels einer Spindel, die in eine Spindelmutter eingreift, hin- und herbeweglich ist. Diese Vorrichtung weist jedoch ebenfalls weder einen Seilzug noch einen Riemen, ein Gurtband oder eine Kette auf. Der als Zufuhrleitung dienende Gummischlauch ist ebenfalls nicht auf dem Boden des Behandlungsbeckens, sondern außerhalb des Behandlungsbeckens angeordnet.

Eine Vorrichtung zur Behandlung von Abwasser ist beispielsweise auch Gegenstand der DE 33 24 072 C2 betreffend die anaerobe Abwasserreinigung. Hierzu weist die Vorrichtung einen Faulbehälter auf, in dem eine rohrförmige Zufuhrleitung mit einem als Verteilerarm ausgeführten Abwasserverteiler um eine lotrechte Achse drehbar gelagert ist. Mit der Zufuhrleitung und dem Abwasserverteiler sind Rohre fest verbunden, die in ihrer Länge derart abgestuft sind, dass das eingeleitete Abwasser über einen Behälterboden möglichst gleichmäßig verteilt wird. An zwei Verteilerarmen des Abwasserverteilers sind Räumschilder angeordnet, die am Boden des Behälters abgesetzte Schwebstoffe zu einem Abzug transportieren.

Weiterhin bezieht sich auch die EP 00 00 293 B1 auf ein Verfahren zur Behandlung von Abfallmaterial bei dem das Absetzen und Verdichten des Schlamms am Boden des Behälters durch mindestens einen um eine Mittelachse des Behälters rotierenden Gasverteilerarm unterbunden wird, aus dem an einer Vielzahl von Austrittsöffnungen entlang der Erstreckung des Gasverteilerarms ein Gas ausströmt.

Als nachteilig erweist sich bei den vorstehenden Vorrichtungen, dass die Reinigung oder Reparatur der in den Behälter eintauchenden Bauelemente die vorhergehende Entleerung des Behälters erfordert. Hiermit sind ein erheblicher Aufwand sowie insbesondere auch ein unerwünschter Stillstand der Anlage verbunden.

In der DE 10 2004 021 022 B3 wird eine Vorrichtung zur anaeroben Reinigung von Abwasser mit einem Behälter und mit einer Abwasserzulaufanordnung für gereinigtes Abwasser beschrieben. Die Abwasserzulaufanordnung weist mindestens zwei Verteilerebenen auf, in denen jeweils Rohrleitungen mit Ausströmöffnungen unbeweglich angeordnet sind.

Als nachteilig bei dieser unbeweglichen Anordnung des Verteilers erweist sich die große Anzahl der zur gleichmäßigen Verteilung in dem Behälter erforderlichen Rohrleitungen. In der Praxis wird derzeit von zumindest einer Austrittsöffnung je Quadratmeter Behältergrundfläche ausgegangen. Aufgrund des erforderlichen Drucks ergeben sich zudem erhebliche Rohrdurchmesser, woraus ein insgesamt großer Herstellungsaufwand resultiert.

Eine Kläranlage gemäß der DE 39 27 881 A1 zum Reinigen von Abwasser besteht aus einem Gehäuse, in dem auf Rollen ein Förderer mit Abstreichern läuft, der reversierbar von einer Welle angetrieben wird. Der Förderer ist am Boden und in der Flüssigkeitsoberfläche einer Eingangskammer angeordnet. Im Boden ist eine Kammer für das Sammeln von Schlamm ausgebildet, in welcher sich ein perforiertes Rohr befindet, welches mit einer Schlammpumpe verbunden ist.

In der DE 43 37 469 C1 wird eine Anlage zur Behandlung von Abwasser und Schlamm beschrieben, welche mit einem Reaktor und zur Sammlung von Gas mit einem in der Wasserphase des Reaktors angeordneten Rohrsystem ausgestattet ist. Das Rohrsystem ist an wenigstens einem im Reaktor schwimmenden Träger angeordnet, über das Abwasser zuführbar oder Schlamm entnehmbar ist.

Außerdem offenbart die DD 235 247 allgemein die biologische Reinigung organische Verunreinigungen enthaltenden Abwassers mit Hilfe anaerober Mikroorganismen. Die für den Abbau der organischen Verunreinigungen verfügbare Biomasse wird unter Berücksichtigung der Konzentrationsabhängigkeit der Reaktionsgeschwindigkeit biologischer Prozesse derart erhöht, dass im gesamten durchflossenen Faulraum immer die gleiche Abbauleistung erreicht wird. Hierzu sind zusätzliche Bewuchsflächen für die Biomasse im Wechsel in zwei unterschiedlichen Höhen in die Faulkammer eingebaut.

Ferner beschreibt auch die DE 20 2004 000 669 U1 eine Vorrichtung zur Behandlung von Abwasser mit einer Leitung zum Herausfördern der Flüssigkeit. Die Vorrichtung hat eine bewegliche Flüssigkeitspumpe, die als Flüssigkeitsbewegungseinrichtung dient und die mit einer Luftstichleitung verbunden ist. Die Bewegung der Flüssigkeitspumpe wird durch einen Rückstoßeffekt der bewegten Flüssigkeit gegen den Boden des Beckens erreicht.

Die DE 101 27 228 B4 beschreibt eine Vorrichtung zum Gären organischer Substanzen. Mittels eines als Seil oder Riemen ausgeführten Kraftübertragungsmittels wird eine Rühreinrichtung rotationsbeweglich angetrieben, die um eine vertikal ausgerichtete Längsachse beweglich angeordnet ist.

Der Erfindung liegt die Aufgabe zugrunde, eine Anlage zu schaffen, die auch in vorhandenen Behandlungsbecken ohne großen Aufwand installiert werden kann und die sich zudem durch eine hohe Funktionssicherheit und durch einfache Reinigungs- und Wartungsmöglichkeiten auszeichnet.

Diese Aufgabe wird erfindungsgemäß mit einer Anlage gemäß den Merkmalen des Anspruchs 1 gelöst. Die Unteransprüche betreffen besonders zweckmäßige Weiterbildungen der Anlage.

Erfindungsgemäß ist also eine Anlage vorgesehen, bei welcher der Abwasserverteiler mittels eines Zugmittels beweglich ist, wobei das Zugmittel einen Seilzug, einen Riemen, ein Gurtband oder eine Kette aufweist, und die Zufuhrleitung in Bewegungsrichtung des Abwasserverteilers auf dem Boden des Behandlungsbeckens unterhalb des Gassammlers oder einer Dreiphasentrennung angeordnet ist. Dadurch erfordert der Abwasserverteiler grundsätzlich keinerlei Führung oder Auflage an einer fest installierten Einrichtung des Behandlungsbeckens. Vielmehr ist der Abwasserverteiler lediglich durch das Zugmittel sowie die Zufuhrleitung mit der Umgebung verbunden. Weiterhin kann aus diesem Grund die Zufuhrleitung zur Wartung oder zu Reparaturzwecken problemlos als Einheit aus dem Behandlungsbecken entnommen werden, so dass eine Entleerung des Behandlungsbeckens nicht erforderlich ist. Der Betrieb der Anlage wird dadurch wesentlich vereinfacht. Die Anlage gestattet außerdem auch eine einfache modulare Erweiterbarkeit. Auf Ventile in dem Abwasserverteiler kann dabei verzichtet und zugleich eine geringe Fließgeschwindigkeit und Energieminimierung realisiert werden. Die Anlage eignet sich dabei gleichermaßen für aerob, anaerob sowie a-noxisch betriebene Anlagen. Dadurch, dass das Zugmittel einen Seilzug, einen Riemen, ein Gurtband oder eine Kette aufweist, ist eine einfache Erfassung der jeweiligen Momentanposition des Abwasserverteilers aufgrund der hierzu identifizierbaren Kettenglieder oder Zähne möglich. Weiterhin wird dadurch, dass die Zufuhrleitung in Bewegungsrichtung des Abwasserverteilers auf dem Boden des Behandlungsbeckens unterhalb des Gassammlers oder einer Dreiphasentrennung angeordnet ist, die Gefahr einer Kollision vermieden.

Eine besonders vorteilhafte Ausführungsform der vorliegenden Erfindung wird dadurch erreicht, dass der Abwasserverteiler eine Haupterstreckung im Wesentlichen quer zur Bewegungsrichtung aufweist und dabei insbesondere als ein gestrecktes Rohr ausgeführt ist, wobei je nach Einsatzzweck und dem Anschluss der Zufuhrleitung der freie Rohrquerschnitt des Abwasserverteilers in Richtung seiner Erstreckung variieren kann.

Das Zugmittel könnte jeweils an gegenüberliegenden Beckenrändern mit einer jeweiligen Wickeltrommel, insbesondere eines Antriebs verbunden sein, so dass die Zugkraft abwechselnd von dem einen oder dem anderen Antrieb eingeleitet wird. Besondere einfach ist es hingegen, wenn das Zugmittel endlos umlaufend ausgeführt ist und an gegenüberliegenden Beckenrändern lediglich eine Umlenkrolle einerseits sowie ein Antriebsrad andererseits zur Übertragung der Antriebsleistung auf das Zugmittel erforderlich sind. Das Zugmittel kann dann sowohl umlaufend als auch reversierend bewegt werden.

Grundsätzlich ist eine manuelle Betätigung des Zugmittels insbesondere bei vergleichsweise kleinen Behandlungsbecken problemlos möglich. Besonders vorteilhaft ist es hingegen, wenn das Zugmittel einen insbesondere elektromotorischen Antrieb aufweist, um so einen kontinuierlichen Betrieb sicherzustellen.

Eine besonders Erfolg versprechende Abwandlung wird auch dadurch erreicht, dass die Zufuhrleitung an einer in dem Behandlungsbecken angeordneten Gliederkette geführt ist. Hierdurch wird in einfacher Weise eine definierte Führung der Zufuhrleitung bei der Bewegung des Abwasserverteilers mittels des Zugmittels zwischen gegenüberliegenden Randbereichen des Behandlungsbeckens erreicht, so dass insbesondere eine unkontrollierte und die vorbestimmte Bewegung unter Umständen behindernde Verlagerung der Zufuhrleitung vermieden wird. Für eine derartige definierte Bewegung, insbesondere Wickelbewegung eignet sich beispielsweise eine Energiekette aus Kunststoff, welche die Zufuhrleitung aufnimmt, um so die Bewegung der Zufuhrleitung auf eine einzige Ebene zu beschränken. Denkbar ist darüber hinaus auch eine Ausgestaltung, bei der das hierzu reversierend angetriebene Zugmittel zugleich die Zufuhrleitung aufnimmt.

Bei einer anderen vorteilhaften Ausgestaltung ist die Zufuhrleitung an einem Mehrgelenkarm geführt ist, wobei sich in der Praxis eine Parallelogrammführungen ebenso wie ein nach dem Ziehharmonikaprinzip verformbarer längenveränderlicher Schlauch eignet und hierzu gemäß einer weiteren Variante die Zufuhrleitung zumindest abschnittsweise als ein Faltenschlauch ausgeführt ist.

Eine andere, ebenfalls besonders Erfolg versprechende Abwandlung wird dadurch erreicht, dass die Zufuhrleitung frei von seitlichen Führungen ist und somit keinen zusätzlichen konstruktiven Aufwand bedingt.

Nach einer weiteren zweckmäßigen Ausführungsform kann der Abwasserverteiler eine Aufnahme für Ballast aufweisen, wobei der Ballast zur Festlegung eines definierten Abstandes auf dem Boden des Behandlungsbeckens gleiten und durch ein Verbindungselement vorbestimmter oder einstellbarer Länge mit dem Abwasserverteiler verbunden sein kann.

Eine andere, ebenfalls Erfolg versprechende Abwandlung wird dadurch erreicht, dass zumindest einzelne der Austrittsöffnungen gegenüber der Horizontalen geneigt, insbesondere nach unten gerichtet sind, so dass durch die Austrittsöffnungen austretendes Abwasser zu einem zusätzlichen Auftrieb oder auch Abtrieb des Abwasserverteilers führt und damit ein berührungsloses Gleiten des Abwasserverteilers in dem Behandlungsbecken sichergestellt ist.

Eine andere, besonders vorteilhafte Weiterbildung der erfindungsgemäßen Anlage wird dadurch erreicht, dass der Abwasserverteiler zumindest einen Sensor zur Erfassung wesentlicher Parameter des zu behandelnden Abwasser aufweist, um so in einfacher Weise eine Überwachung des in dem Behandlungsbecken vorhandenen Abwassers zu ermöglichen. Die Messwerterfassung kann dabei beispielsweise auch ortsaufgelöst in Abhängigkeit der jeweiligen Position des Abwasserverteilers in dem Behandlungsbecken erfolgen.

Eine andere, ebenfalls besonders praxisgerechte Abwandlung wird dann erreicht, wenn der Abwasserverteiler eine die Durchmischung des zugeführten Abwassers und des bereits in dem Behandlungsbecken vorhandenen Abwassers begünstigende Außenkontur aufweist. Hierdurch erfüllt der Abwasserverteiler durch seine Bewegung in dem Behandlungsbecken zugleich die Funktion der Abwassereinleitung als auch der Durchmischung. An dem Abwasserverteiler können zu diesem Zweck Strömungsleitelemente entsprechend positionierbar sein.

Die Zufuhrleitung kann grundsätzlich beliebig mittig oder seitlich an den Abwasserverteiler angeschlossen sein. Besonders einfach ist es hingegen, wenn die Zufuhrleitung quer zur Bewegungsrichtung des Abwasserverteilers zu einem Seitenrand geführt ist und hierzu eine in eine Abwasserzuführung eintauchende Fördereinheit gemeinsam mit dem Abwasserverteiler mittels des Zugmittels beweglich ist. Hierdurch können nahezu beliebig große, insbesondere flache Behandlungsbecken versorgt werden, ohne dass hierzu die Zufuhrleitung geändert werden muss. Vielmehr gelangt das Abwasser durch eine stationäre offene Abwasserzuführung in die Zufuhrleitung, die hierzu in der Abwasserzuführung hin- und herbewegt wird.

Der Abwasserverteiler könnte als ein Rohrstück ausgeführt sein, dessen Endabschnitte geschlossen sind, so dass das Abwasser ausschließlich durch die Austrittöffnungen am Umfang des Rohrstücks austreten kann. Demgegenüber erweist es sich als zweckmäßig, wenn der Abwasserverteiler ringförmig geschlossen ausgeführt ist, so dass in einfacher Weise ein Druckausgleich in dem Abwasserverteiler unabhängig von dem Ort der Abwassereinleitung erfolgt und zugleich die mechanische Stabilität verbessert wird. Zudem kann der Abwasserverteiler auch mehrere Austrittsöffnungen in verschiedenen Ebenen, bezogen auf die Flüssigkeitsspiegel, aufweisen.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig.1: eine Seitenansicht einer erfindungsgemäßen Anlage zur Behandlung von Abwasser mit einem Behandlungsbecken;
- Fig.2: eine Draufsicht einer weiteren Ausführungsform einer Anlage mit einer seitlichen Abwasserzuführung.

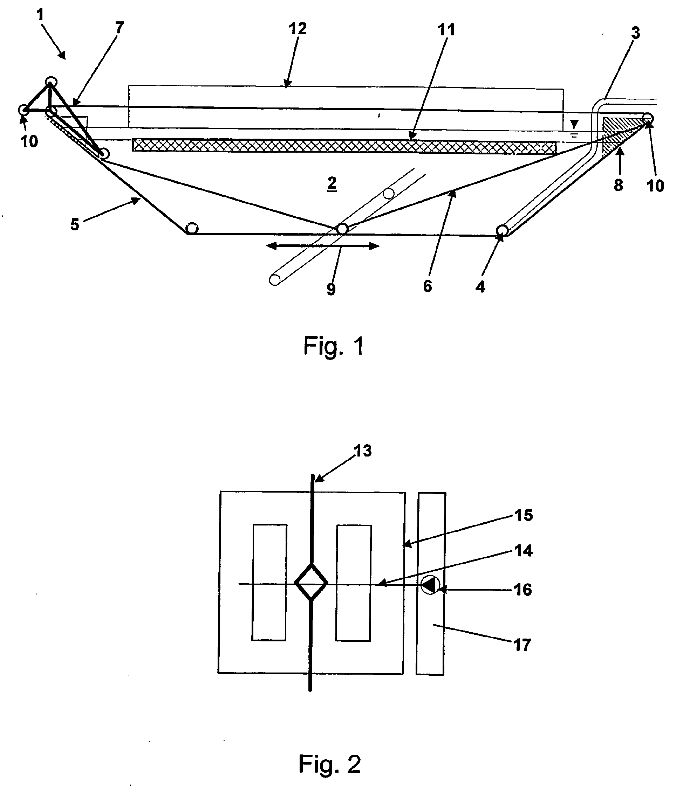

Figur 1 zeigt eine Vorrichtung 1 zur Behandlung von Abwasser 2 in einer Seitenansicht. Die Vorrichtung 1 ist mit einer Zufuhrleitung 3 für das Abwasser 2 ausgestattet, die mit einem Abwasserverteiler 4 verbunden ist. Um eine gleichmäßige Abwassereinleitung in ein Behandlungsbecken 5 zu erreichen, ist der Abwasserverteiler 4 mittels eines endlos umlaufenden Zugmittels 6 reversierend zwischen gegenüberliegenden Randbereichen 7, 8 des Behandlungsbeckens 5 in Richtung des Doppelpfeils 9 beweglich angeordnet. Zu diesem Zweck ist die schlauchförmige Zufuhrleitung 3 elastisch verformbar ausgeführt. Dabei erfolgt die Bewegung mittels an den Randbereichen 7, 8 angeordneter Umlenkrollen 10 derart, dass eine Beeinträchtigung des oberhalb des Abwasserverteilers 4 angeordneten Dreiphasentrennung 11 sowie eines Gassammlers 12 ausgeschlossen ist.

In Figur 2 ist eine andere Ausführungsform einer Vorrichtung 13 in einer Draufsicht dargestellt, bei der eine Zufuhrleitung 14 quer zur Bewegungsrichtung des Abwasserverteilers 4 zu einem Seitenrand 15 des Behandlungsbeckens 5 geführt ist. Der Zufuhrleitung 14 ist eine Fördereinheit 16 zur Zuführung des zu behandelnden Abwassers aus einer als Kanal ausgeführten Abwasserzuführung 17 in die Zufuhrleitung 14 zugeordnet, wobei die Fördereinheit 16 synchron zu dem mittels eines Zugmittels beweglichen Abwasserverteiler 4 beweglich ist.

## Patentansprüche

1. Anlage zur Behandlung von Abwasser (2) und Schlamm mit einem in einem Behandlungsbecken (5) angeordneten Gassammler (12) zum Auffangen entstehender oder eingeleiteter Gase und mit einer Vorrichtung (1, 13) zur Behandlung von Abwasser (2) mit zumindest einer Zufuhrleitung (3, 14) und mit einem mit Austrittsöffnungen ausgestatteten, beweglichen Abwasserverteiler (4) für das zu behandelnde Abwasser (2), welcher in dem Behandlungsbecken (5) positionierbar ist, wobei die Zufuhrleitung (3, 14) flexibel und/oder elastisch ausgeführt ist und der Abwasserverteiler (4) reversierend zwischen gegenüberliegenden Randbereichen (7, 8) des Behandlungsbeckens (5) beweglich ist, **dadurch gekennzeichnet, dass** der Abwasserverteiler (4) mittels eines Zugmittels (6) beweglich ist, wobei das Zugmittel (6) einen Seilzug, einen Riemen, ein Gurtband und/oder eine Kette aufweist und die Zufuhrleitung (3, 14) in Bewegungsrichtung (9) des Abwasserverteilers (4) auf dem Boden des Behandlungsbeckens (5) unterhalb des Gassammlers (12) oder einer Dreiphasentrennung (11) angeordnet ist.

2. Anlage nach Anspruch 1, **dadurch gekennzeichnet, dass** der Abwasserverteiler (4) eine Haupterstreckung im Wesentlichen quer zur Bewegungsrichtung (9) aufweist.

3. Anlage nach den Ansprüchen 1 oder 2, **dadurch gekennzeichnet, dass** der Abwasserverteiler (4) ein gestrecktes Rohr aufweist.

4. Anlage nach zumindest einem der vorhergehenden Ansprüche, **dadurch gekennzeichnet, dass** das Zugmittel (6) endlos umlaufend ausgeführt ist.

5. Anlage nach zumindest einem der vorhergehenden Ansprüche, **dadurch gekennzeichnet, dass** das Zugmittel (6) einen insbesondere elektromotorischen Antrieb aufweist.

6. Anlage nach zumindest einem der vorhergehenden Ansprüche, **dadurch gekennzeichnet, dass** die Zufuhrleitung (3, 14) an einer in dem Behandlungsbecken (5) angeordnete Gliederkette geführt ist.

7. Anlage nach zumindest einem der vorhergehenden Ansprüche, **dadurch gekennzeichnet, dass** die Zufuhrleitung (3, 14) an einem Mehrgelenkarm geführt ist.

8. Anlage nach zumindest einem der vorhergehenden Ansprüche, **dadurch gekennzeichnet, dass** die Zufuhrleitung (3, 14) zumindest abschnittsweise als ein Faltenschlauch ausgeführt ist.

9. Anlage nach zumindest einem der vorhergehenden Ansprüche, **dadurch gekennzeichnet, dass** die Zufuhrleitung (3, 14) frei von seitlichen Führungen ist.

10. Anlage nach zumindest einem der vorhergehenden Ansprüche, **dadurch gekennzeichnet, dass** der Abwasserverteiler (4) einen einstellbaren Auftrieb aufweist.

11. Anlage nach zumindest einem der vorhergehenden Ansprüche, **dadurch gekennzeichnet, dass** der Abwasserverteiler (4) eine Aufnahme für Abtrieb hat.

12. Anlage nach zumindest einem der vorhergehenden Ansprüche, **dadurch gekennzeichnet, dass** zumindest einzelne der Austrittsöffnungen gegenüber der Horizontalen geneigt, insbesondere nach unten gerichtet sind.

13. Anlage nach zumindest einem der vorhergehenden Ansprüche, **dadurch gekennzeichnet, dass** der Abwasserverteiler (4) zumindest einen Sensor zur Erfassung wesentlicher Parameter des zu behandelnden Abwassers (2) aufweist.

14. Anlage nach zumindest einem der vorhergehenden Ansprüche, **dadurch gekennzeichnet, dass** der Abwasserverteiler (4) eine die Durchmischung des zugeführten Abwassers (2) und des bereits in dem Behandlungsbecken (5) vorhandenen Abwassers (2) begünstigende Außenkontur aufweist.

15. Anlage nach zumindest einem der vorhergehenden Ansprüche, **dadurch gekennzeichnet, dass** die Zufuhrleitung (3, 14) quer zur Bewegungsrichtung (9) des Abwasserverteilers (4) zu einem Seitenrand (15) geführt ist.

16. Anlage nach Anspruch 15, **dadurch gekennzeichnet, dass** der Zufuhrleitung (3, 14) eine Fördereinheit (16) zur Zuführung des zu behandelnden Abwassers (2) aus einer Abwasserzuführung (17) in die Zufuhrleitung (3, 14) zugeordnet ist.

17. Anlage nach Anspruch 15 oder 16, **dadurch gekennzeichnet, dass** die Fördereinheit (16) synchron mit dem Abwasserverteiler (4) beweglich ist.

18. Anlage nach zumindest einem der vorhergehenden Ansprüche, **dadurch gekennzeichnet, dass** der Abwasserverteiler ringförmig geschlossen ausgeführt ist.

## Claims

1. Plant for the treatment of wastewater (2) and sludge, with a gas collector (12) which is arranged in a treatment tank (5) and is intended for trapping gases produced or introduced, with an apparatus (1, 13) for the treatment of wastewater (2), with at least one feed line (3, 14) and with a movable wastewater distributor (4) for the wastewater (2) which is to be treated, which wastewater distributor is provided with outlet openings and can be positioned in the treatment tank (5), wherein the feed line (3, 14) is of flexible and/or elastic design, and the wastewater distributor (4) is movable in a reversing manner between opposite edge regions (7, 8) of the treatment tank (5), **characterized in that** the wastewater distributor (4) is movable by means of a traction means (6), the traction means (6) having a cable pull, a belt, a belt band and/or a chain, and the feed line (3, 14) being arranged on the bottom of the treatment tank (5) below the gas collector (12) or a three-phase separation (11) in the direction of movement (9) of the wastewater distributor (4).

2. Plant according to Claim 1, **characterized in that** the wastewater distributor (4) has a main extent substantially transversely with respect to the direction of movement (9).

3. Plant according to Claim 1 or 2, **characterized in that** the wastewater distributor (4) has an elongated pipe.

4. Plant according to at least one of the preceding claims, **characterized in that** the traction means (6) is of endlessly circulating design.

5. Plant according to at least one of the preceding claims, **characterized in that** the traction means (6) has a drive, in particular an electric motor drive.

6. Plant according to at least one of the preceding claims, **characterized in that** the feed line (3, 14) is guided on a link chain arranged in the treatment tank (5).

7. Plant according to at least one of the preceding claims, **characterized in that** the feed line (3, 14) is guided on a multi-joint arm.

8. Plant according to at least one of the preceding claims, **characterized in that** the feed line (3, 14) is designed at least in some sections as a corrugated hose.

9. Plant according to at least one of the preceding claims, **characterized in that** the feed line (3, 14) is free from lateral guides.

10. Plant according to at least one of the preceding claims, **characterized in that** the wastewater distributor (4) has adjustable buoyancy.

11. Plant according to at least one of the preceding claims, **characterized in that** the wastewater distributor (4) has a downforce receptacle.

12. Plant according to at least one of the preceding claims, **characterized in that** of the outlet openings at least individual ones are inclined in relation to the horizontal, in particular are directed downward.

13. Plant according to at least one of the preceding claims, **characterized in that** the wastewater distributor (4) has at least one sensor for detecting essential parameters of the wastewater (2) to be treated.

14. Plant according to at least one of the preceding claims, **characterized in that** the wastewater distributor (4) has an outer contour promoting thorough mixing of the wastewater (2) fed in and of the wastewater (2) already present in the treatment tank (5).

15. Plant according to at least one of the preceding claims, **characterized in that** the feed line (3, 14) is guided transversely with respect to the direction of movement (9) of the wastewater distributor (4) with respect to a side edge (15).

16. Plant according to Claim 15, **characterized in that** the feed line (3, 14) is assigned a conveying unit (16) for feeding the wastewater (2) which is to be treated from a wastewater feed (17) into the feed line (3, 14).

17. Plant according to Claim 15 or 16, **characterized in that** the conveying unit (16) is movable synchronously with the wastewater distributor (4).

18. Plant according to at least one of the preceding claims, **characterized in that** the wastewater distributor is of annularly closed design.

## Revendications

1. Installation de traitement d'eaux usées (2) et de boues présentant
un collecteur de gaz (12) disposé dans un bassin de traitement (5) et destiné à reprendre les gaz dégagés ou introduits,
un dispositif (1, 13) de traitement des eaux usées (2) présentant au moins un conduit d'amenée (3, 14) et un répartiteur mobile (4) des eaux usées (2) à traiter,
le répartiteur étant doté d'ouvertures de sortie et apte à être placé dans le bassin de traitement (5),
le conduit d'amenée (3, 14) étant flexible et/ou élastique et le répartiteur (4) d'eaux usées pouvant être déplacé de manière réversible entre des bordures opposées (7, 8) du bassin de traitement (5), **caractérisée en ce que**
le répartiteur (4) d'eaux usées peut être déplacé à l'aide d'un moyen de traction (6),
**en ce que** le moyen de traction (6) présente un câble de traction, une courroie, une sangle et/ou une chaîne et
**en ce que** le conduit d'amenée (3, 14) est disposé dans la direction (9) de déplacement du répartiteur (4) d'eaux usées sur le fond du bassin de traitement (5), en dessous du collecteur de gaz (12) ou d'une séparation (11) en trois phases.

2. Installation selon la revendication 1, **caractérisée en ce que** l'extension principale du répartiteur (4) d'eaux usées est essentiellement transversale par rapport à la direction de déplacement (9).

3. Installation selon les revendications 1 ou 2, **caractérisée en ce que** le répartiteur (4) d'eaux usées présente un tube étiré.

4. Installation selon au moins l'une des revendications précédentes, **caractérisée en ce que** le moyen de traction (6) tourne en boucle fermée.

5. Installation selon au moins l'une des revendications précédentes, **caractérisée en ce que** le moyen de traction (6) présente un entraînement, en particulier par moteur électrique.

6. Installation selon au moins l'une des revendications précédentes, **caractérisée en ce que** le conduit d'amenée (3, 14) est guidé sur une chaîne à maillons disposée dans le bassin de traitement (5).

7. Installation selon au moins l'une des revendications précédentes, **caractérisée en ce que** le conduit d'amenée (3, 14) est guidé sur un bras polyarticulé.

8. Installation selon au moins l'une des revendications précédentes, **caractérisée en ce qu'**au moins certaines parties du conduit d'amenée (3, 14) sont formées d'un tuyau flexible en accordéon.

9. Installation selon au moins l'une des revendications précédentes, **caractérisée en ce que** le conduit d'amenée (3, 14) ne présente pas de guides latéraux.

10. Installation selon au moins l'une des revendications précédentes, **caractérisée en ce que** le répartiteur (4) d'eaux usées présente une sustentation ajustable.

11. Installation selon au moins l'une des revendications précédentes, **caractérisée en ce que** le répartiteur (4) d'eaux usées présente un logement pour dispositif d'abaissement.

12. Installation selon au moins l'une des revendications précédentes, **caractérisée en ce qu'**au moins certaines des ouvertures de sortie sont inclinées par rapport à l'horizontale et en particulier orientées vers le bas.

13. Installation selon au moins l'une des revendications précédentes, **caractérisée en ce que** le répartiteur (4) d'eaux usées présente au moins un détecteur qui saisit des paramètres importants des eaux usées (2) à traiter.

14. Installation selon au moins l'une des revendications précédentes, **caractérisée en ce que** le répartiteur (4) d'eaux usées présente un contour extérieur qui favorise le mélange intime des eaux usées (2) apportées et des eaux usées (2) déjà présentes dans le bassin de traitement (5).

15. Installation selon au moins l'une des revendications précédentes, **caractérisée en ce que** le conduit d'amenée (3, 14) est guidé transversalement par rapport à la direction de déplacement (9) du répartiteur (4) d'eaux usées en direction d'un bord latéral (15).

16. Installation selon la revendication 15, **caractérisée en ce qu'**une unité de transport (16) qui amène les eaux usées (2) à traiter dans le conduit d'amenée (3, 14) en provenance d'une amenée (17) d'eaux usées est associée au conduit d'amenée (3, 14).

17. Installation selon les revendications 15 ou 16, **caractérisée en ce que** l'unité de transport (16) peut être déplacée de manière synchronisée par rapport au répartiteur (4) d'eaux usées.

18. Installation selon au moins l'une des revendications précédentes, **caractérisée en ce que** le répartiteur d'eaux usées est réalisé en forme d'anneau fermé.
